# FASCICULE DE BREVET EUROPEEN

(11) **EP 4 360 982 B1**
(45) Date de publication et mention de la délivrance du brevet: **12.02.2025**
(21) Numéro de dépôt: 23205131.8
(22) Date de dépôt: 23.10.2023
(51) Int. Cl.: B61D 1/04, B61D 17/18, B61D 33/00, B60N 2/24

(54) **VÉHICULE À PLINTHES UNIQUES**
FAHRZEUG MIT EINZELNEN SOCKELLEISTEN
VEHICLE WITH UNIQUE SKIRTING BOARDS

(30) Priorité: 24.10.2022 FR 2210989
(43) Date de publication de la demande: 01.05.2024
(73) Titulaire: SpeedInnov, 75008 Paris (FR)
(72) Inventeur: MARTIN, David Jérôme, 17220 Sainte Soulle (FR); LANDREAUD, Christophe, 17250 Les Essards (FR); LEPETIT, Michel, 17700 Saint Pierre d'Amilly (FR); SANSON, Olivier, 17000 La Rochelle (FR); BERNARD, Alexandre, 17340 Châtelaillon-Plage (FR); BONDU, Fabien, 17300 Rochefort (FR)
(74) Mandataire: Lavoix

(56) Documents cités:
- EP-A1- 3 656 607
- US-A1- 2021 006 051

## Description

La présente invention concerne un véhicule comprenant :
- au moins une première rangée de sièges successivement alignés le long d'une première paroi du véhicule, les sièges de chaque première rangée étant séparés les uns des autres par un premier pas constant,
- au moins une deuxième rangée de sièges successivement alignés le long d'une deuxième paroi du véhicule, les sièges de chaque deuxième rangée étant séparés les uns des autres par un deuxième pas constant, le deuxième pas étant strictement inférieur au premier pas,
chaque siège de chaque première rangée et de chaque deuxième rangée comprenant un pied latéral respectif,
- des câbles s'étendant entre les pieds latéraux des sièges successifs de la première rangée et de la deuxième rangée,
- des premières plinthes, chaque première plinthe s'étendant entre les pieds latéraux de deux des sièges de chaque première rangée et recouvrant et portant les câbles, et
- des deuxièmes plinthes, chaque deuxième plinthe s'étendant entre les pieds latéraux de deux des sièges de chaque deuxième rangée et recouvrant et portant les câbles.

Dans les véhicules destinés au transport de passager tels que décrit dans le document US 2021/006051 A1, il est commun de disposer les sièges avec des écartements variables entre les sièges d'une rangée de sièges à l'autre. Cela est notamment le cas lorsque le véhicule comprend une première classe et une deuxième classe, les sièges de la première classe étant plus espacés les uns des autres afin d'offrir un confort supérieur.

Les sièges de véhicule sont généralement connectés au réseau électrique et/ou électronique du véhicule, afin de mettre à la disposition des voyageurs des fonctions de confort et d'interactivité pendant leur voyage.

Pour des raisons d'ergonomie et de praticité, les sièges sont connectés en série par des câbles courant le long des parois du véhicule, des plinthes recouvrant les câbles entre les pieds de siège pour les protéger et pour les masquer afin d'améliorer l'esthétique du compartiment.

Cependant, il est nécessaire d'utiliser plusieurs modèles de plinthes et de pieds de sièges différents les uns des autres, afin d'adapter l'agencement des pieds et des plinthes à l'écartement variable des sièges.

Cet agencement de véhicule nécessite la conception et la fabrication de plusieurs variantes de chacune des pièces, ce qui engendre des surcoûts et un temps de préparation supplémentaire.

Un but de l'invention est ainsi de fournir un véhicule permettant de varier l'écartement entre les sièges d'une rangée à l'autre, sans augmenter de manière importante le coût et le temps de conception requis.

A cet effet, l'invention a pour objet un véhicule du type précité, dans lequel les premières plinthes et les deuxièmes plinthes présentent des longueurs identiques, mesurées selon une direction d'étendue respectivement de la première rangée et de la deuxième rangée, chaque première plinthe et/ou chaque deuxième plinthe comprend, à au moins une extrémité, une portion recouverte par un des pieds latéraux des sièges entre lesquels la première plinthe et/ou la deuxième plinthe est disposée.

Un tel véhicule permet l'utilisation d'une unique variante de pied et/ou de plinthe pour chacune des rangées, malgré des écartements différents entre les sièges.

Selon des modes de réalisation particuliers, le véhicule selon l'invention présente l'une ou plusieurs des caractéristiques suivantes, prise(s) isolément ou selon toute combinaison techniquement réalisable :
- Les câbles, les premières plinthes et les deuxièmes plinthes s'étendent respectivement le long de la première paroi et de la deuxième paroi, chaque portion recouverte s'étendant de préférence entre la première paroi, respectivement la deuxième paroi, et le pied latéral.
- Chaque première plinthe et chaque deuxième plinthe s'étend dans un plan sensiblement parallèle à des direction d'élongation principales des pieds latéraux.
- Chaque pied latéral comprend une partie de support d'une assise du siège et un capot recouvrant au moins partiellement la partie de support, chaque portion recouverte des plinthes étant recouverte par le capot d'un pied latéral et s'étendant à l'écart de la partie de support dudit pied latéral.
- Chaque pied latéral comprend, pour chaque portion recouverte, un joint d'étanchéité s'étendant entre le capot et la portion recouverte.
- Les pieds latéraux des sièges de la première rangée et les pieds latéraux des sièges de la seconde rangée sont identiques les uns aux autres.
- Chaque portion recouverte de chaque première plinthe présente une longueur strictement inférieure à 5% de la longueur de la première plinthe et chaque portion recouverte de chaque deuxième plinthe présente une longueur strictement supérieure à 5% de la longueur de la deuxième plinthe.
- Chaque plinthe présente une longueur comprise entre 500 mm et 800 mm, de préférence comprise entre 600 mm et 650 mm.
- Chaque première plinthe et chaque deuxième plinthe présente un bord supérieur s'étendant entre la première paroi, respectivement la seconde paroi et un élément de parement de la paroi.
- Les câbles sont entièrement portés par les premières plinthes et les deuxièmes plinthes.

L'invention sera mieux comprise à la lecture de la description qui suit, donnée uniquement à titre d'exemple et faite en référence aux dessins annexés, parmi lesquels :
- [Fig 1] la figure 1 est une vue schématique en coupé latérale d'un véhicule selon l'invention,
- [Fig 2] la figure 2 est une vue de détail des pieds de siège et des plinthes du véhicule de la figure 1, et
- [Fig 3] la figure 3 est une vue en coupe transversale des plinthes de la figure 2.

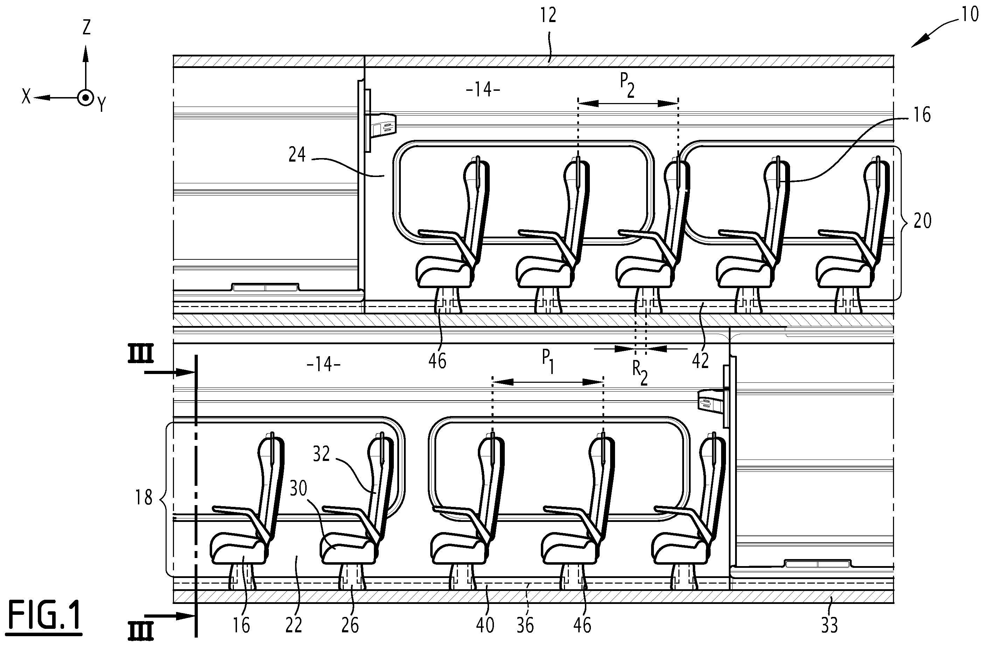

Un véhicule 10 est représenté sur la figure 1. Le véhicule 10 est un véhicule destiné à accueillir et transporter des passagers. Le véhicule 10 est par exemple un véhicule ferroviaire, comme un train à grande vitesse, un métro ou un tramway. En variante, le véhicule 10 est un véhicule routier, comme un bus.

La description qui suit est faite en référence à une direction longitudinale X, une direction transversale Y et une direction d'élévation Z, représentées sur les figures. La direction longitudinale X s'étend selon la direction d'avancée du véhicule 10 en fonctionnement normal. La direction d'élévation Z est orthogonale à la direction longitudinale X et correspond à la hauteur du véhicule. La direction transversale Y est orthogonale à la direction longitudinale X et à la direction d'élévation Z.

Par les termes « sensiblement parallèle », « sensiblement selon » et « sensiblement perpendiculaire », on entend respectivement « parallèle », « selon » et « perpendiculaire » avec une marge d'erreur angulaire inférieure ou égale à 10°, de préférence inférieure à 5°.

Par le terme « sensiblement égal », on entend « égal » avec une marge d'erreur inférieure ou égale à 10% de la valeur nominale, de préférence inférieure ou égale à 5%.

Le véhicule 10 comprend des parois 12 délimitant au moins un compartiment 14 destiné à accueillir les passagers. Dans l'exemple représenté, le véhicule 10 comprend deux compartiments superposés selon la direction d'élévation Z.

Le véhicule 10 comprend de plus des sièges 16 répartis en rangées dans chaque compartiment 14. Dans l'exemple représenté, le véhicule 10 comprend une première rangée 18 de sièges 16 s'étendant dans le compartiment 14 inférieur relativement à la direction d'élévation Z et une deuxième rangée 20 de sièges 16 s'étendant dans le compartiment 14 supérieur relativement à la direction d'élévation Z.

Par le terme « rangée de sièges », on entend une pluralité de sièges 16 alignés, par exemple selon la direction longitudinale X.

Les sièges 16 d'une même rangée 18, 20 sont par exemple orientés de manière à faire face à la même direction. En variante, certains des sièges 16 de la rangée 18, 20 sont orientés dans la direction opposées, de manière à faire face à un autre siège 16.

La première rangée 18 s'étend le long d'une première paroi 22 latérale du compartiment 14 inférieur et la deuxième rangée 20 s'étend le long d'une deuxième paroi 24 latérale du compartiment 14 supérieur. Par le terme « paroi latérale », on entend que les première 22 et deuxième 24 parois délimitent respectivement les premier et deuxième compartiments 14 selon la direction transversale Y.

En variante, la première paroi 22 et la deuxième paroi 24 sont deux parois opposées délimitant un même compartiment 14 latéralement.

Selon une autre variante, la première paroi 22 et la deuxième paroi 24 sont deux parties d'une même paroi latérale alignées successivement selon la direction longitudinale X.

Selon une autre variante, la première paroi 22 et la deuxième paroi 24 sont situées dans deux voitures différentes du véhicule 10.

Les sièges 16 de la première rangée 18 sont séparés par un premier pas P₁ constant, et les sièges 16 de la deuxième rangée 20 sont séparés par un deuxième pas P₂ constant, différent du premier pas P₁, et notamment strictement inférieur au premier pas P₁.

Par exemple, le premier pas P₁ est compris entre 930 mm et 980 mm, notamment sensiblement égal à 950 mm, et le deuxième pas P₂ est compris entre 880 mm et 930 mm, notamment sensiblement égal à 905 mm.

Le pas P1, P2 est la distance séparant deux sièges 16 adjacents d'une rangée 18, 20, mesurée selon la direction dans laquelle s'étend la rangée 18, 20.

Notamment, le pas P₁, P₂ séparant deux siège 16 d'une rangée 18, 20 est mesuré selon la direction d'élongation de la rangée 18, 20, par exemple la direction longitudinale X, entre deux points identiques des deux sièges 16. Dans l'exemple représenté, le pas P₁, P₂ est mesuré entre les sommets des sièges 16, c'est-à-dire le point le plus élevé du siège 16 selon la direction d'élévation Z.

Par exemple, la première rangée 18 de sièges 16 est une rangée de sièges de type « première classe », tandis que la deuxième rangée 20 de sièges 16 est une rangée de sièges de type « seconde classe ».

Chaque siège 16 est par exemple destiné à accueillir deux passagers.

En variante, au moins une partie des sièges 16 est destinée à accueillir un passager ou trois passagers ou plus.

Chaque siège 16 comprend un pied central 26 et un pied latéral 28, supportant une assise 30 et un dossier 32.

Le pied central 26 et le pied latéral 28 présentent des formes allongées principalement selon une direction d'élongation sensiblement parallèle à la direction d'élévation Z, entre un plancher 33 du compartiment 14 et l'assise 30.

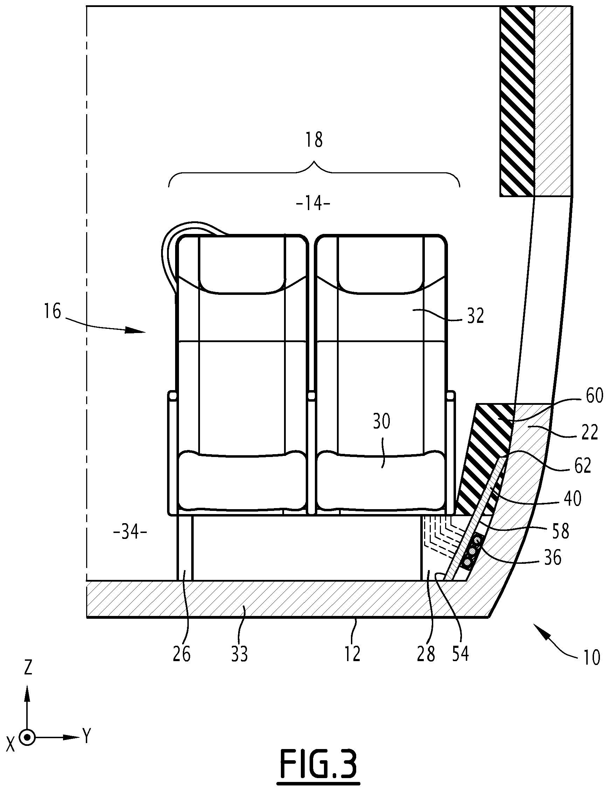

Comme représenté sur la figure 3, le pied central 26 et le pied latéral 28 sont fixés à deux bords latéraux de l'assise 30, à l'écart l'un de l'autre selon la direction transversale Y.

Le pied central 26 est situé au voisinage d'une allée de circulation 34 des voyageurs dans le compartiment 14, tandis que le pied latéral 28 s'étend au voisinage de la première paroi 22 ou la deuxième paroi 24.

Avantageusement, les pieds latéraux 28 des sièges 16 de la première rangée 18 et de la seconde rangée sont identiques entre eux. Cela permet de simplifier la conception des sièges 16 du véhicule 10.

Les sièges 16 comprennent des modules électriques et/ou électroniques (non représentés), nécessitant une alimentation électrique et un transfert de données.

Ces modules électriques et/ou électroniques comprennent par exemple des prises de rechargement pour matériel électronique, des ports d'accès à un réseau de communication, des capteurs de détection d'occupation du siège 16, des dispositifs de signalement ou d'appel du personnel de bord, un ou plusieurs écrans, ou un dispositif de commande pour déplacer le siège 16 entre plusieurs configurations, par exemple en modifiant l'inclinaison du dossier 32.

A cet effet, le véhicule 10 comprend des câbles 36, par exemple des câbles électriques et/ou des bus de données, s'étendant entre les pieds latéraux des sièges 16 successifs, de manière à connecter les sièges 16 « en série » pour mettre en oeuvre cette alimentation électrique et ce débit de donnée.

Les câbles 36 s'étendent le long de la première paroi 22 pour la première rangée et de la deuxième paroi 24 pour la deuxième rangée, d'un siège 16 à l'autre, et remontent par les pieds latéraux 28 des sièges 16 pour atteindre et être connectés aux modules électriques et/ou électroniques.

Le véhicule 10 comprend de plus des premières plinthes 40 et des deuxièmes plinthes 42, chaque première plinthe 40 s'étendant entre deux des sièges 16 de la première rangée 18 et chaque deuxième plinthe 42 s'étend entre deux des sièges 16 de la deuxième rangée 20, par-dessus les câbles 36.

Ainsi, les câbles 36 s'étendant dans chaque espace séparant deux sièges 16 successifs d'une rangée 18, 20, sont portés par une des plinthes 40, 42.

Les premières plinthes 40 et les deuxièmes plinthes 42 sont disposées de manière à porter et recouvrir intégralement les câbles 36, pour les protéger et pour les masquer afin d'améliorer l'esthétique du compartiment 14, comme représenté sur la figure 3.

Par l'expression « porter les câbles 36 », on entend que chaque câble 36 est intégralement supporté par la première plinthe 40 ou par la deuxième plinthe 42, et n'est pas directement fixé à la première paroi 22 ou à la deuxième paroi 24.

Les premières plinthes 40 et les deuxièmes plinthes 42 sont des plaques de parement et de protection des câbles 36, par exemple métalliques, présentant une forme sensiblement rectangulaire.

Les premières plinthes 40 et les deuxièmes plinthes 42 s'étendent le long de la première paroi 20 et de la deuxième paroi 22 respectivement. Chaque plinthe 40, 42 est confirmée pour épouser sensiblement la forme de la paroi 22, 24 contre laquelle elle est disposée, tout en ménageant un espace de passage des câbles 36.

Notamment, les plinthes 40, 42 s'étendent dans des plans respectifs sensiblement parallèles à la direction d'élévation Z, c'est-à-dire parallèlement à la direction d'élongation principale du pied latéral 28.

En variante, les premières plinthes 40 et les deuxièmes plinthes 42 s'étendent contre le plancher 33 du compartiment 14.

Chaque plinthe 40, 42 présente deux extrémités 44 à l'écart l'une de l'autre selon la direction d'étendue respectivement de la première rangée 18 et de la deuxième rangée 20, par exemple la direction longitudinale X.

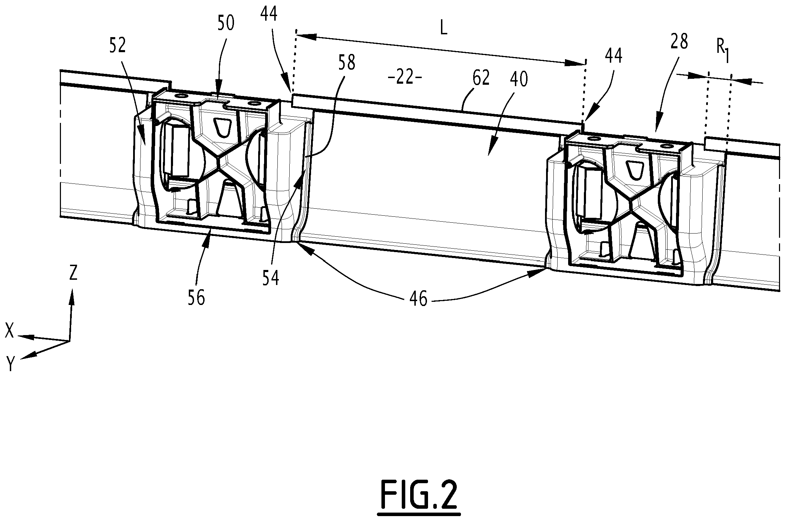

Les premières plinthes 40 et les deuxièmes plinthes 42 présentent des longueurs L identiques, mesurées entre les extrémités 44 de la plinthe 40, 42, selon la direction d'étendue respectivement de la première rangée 18 et de la deuxième rangée 20, par exemple la direction longitudinale X, comme représenté sur la figure 2.

Par exemple, chaque première plinthe 40 et chaque deuxième plinthe 42 présente une longueur L comprise entre 600 mm et 650 mm.

Comme montré sur les figures 1 et 2, les premières plinthes 40 et les deuxièmes plinthes 42 s'étendent entre les pieds latéraux 28 des sièges 16. De plus, chaque première plinthe 40 et chaque deuxième plinthe 42 comprend, à au moins une extrémité, une portion recouverte 46 par un des pieds latéraux 28 des sièges 16 entre lesquels elle est disposée.

Chaque portion recouverte 46 est une partie de la plinthe 40, 42 voisine de l'extrémité 44, qui s'étend par exemple entre le pied latéral 28 et la première paroi 22 ou deuxième paroi 24, relativement à la direction transversale Y, comme représenté sur la figure 3.

La portion recouverte 44 des premières plinthes 40 et des deuxièmes plinthes 42 permet de compenser la différence entre le premier pas P1 et le deuxième pas P2 tout en utilisant des plinthes 40, 42 de même longueur L.

Notamment, chaque portion recouverte 44 de chaque première plinthe 40 présente une longueur R₁ strictement inférieure à 5% de la longueur L de la première plinthe 40 et chaque portion recouverte 44 de chaque deuxième plinthe 42 présente une longueur R₂ strictement supérieure à 5% de la longueur L de la deuxième plinthe 42. Les longueurs R₁, R₂ des portions recouvertes 44 sont mesurées selon la direction longitudinale X, depuis l'extrémité de la plinthe 40, 42.

Par exemple, chaque première plinthe 40 et chaque deuxième plinthe 42 présente une longueur L sensiblement égale 615 mm, et comprend une portion recouverte 46 à chacune de ses extrémités 44. Chaque portion recouverte 46 de chaque première plinthe 40 présente alors par exemple une longueur R₁ sensiblement inférieure à 30 mm, notamment inférieure à 20 mm, et chaque portion recouverte 46 de chaque deuxième plinthe 42 présente par exemple une longueur R₂ sensiblement supérieure à 35 mm, notamment supérieure à 40 mm.

En variante, la portion recouverte 46 s'étend entre le pied latéral 28 et le plancher 33.

Avantageusement, comme représenté sur la figure 2, chaque pied latéral 28 comprend une partie de support 50 de l'assise 30 et un capot 52 recouvrant, au moins longitudinalement, la partie de support 50. Chaque portion recouverte 46 des plinthes 40, 42 est recouverte par le capot 52 et s'étend à l'écart de la partie de support 50.

La partie de support 50 est la partie du pied latéral 28 supportant mécaniquement l'assise 30, disposée de manière centrale relativement au capot 52.

La partie de support 50 s'étend par exemple à une distance, mesurée selon la direction longitudinale X, supérieure à 10 mm de l'extrémité 44 de chaque plinthe 40, 42, de manière à éviter l'endommagement des plinthes 40, 42 et du pied latéral 28 lors de l'assemblage du siège 16.

Le capot 52 entoure la partie de support 50, au moins en regard de faces longitudinales de la partie de support 50 orthogonales à la direction longitudinale X. Le capot 52 permet de protéger la partie de support 50 et l'extrémité 44 de la plinthe 40, 42 de l'extérieur.

Le capot 52 s'étend jusqu'au voisinage contre la plinthe 40, 42 selon la direction transversale Y, du côté de la plinthe 40, 42 opposée à la paroi 22, 24. Notamment, le capot 52 définit un bord 54 qui s'étend au voisinage de la plinthe 40, 42, voire en contact contre la plinthe 40, 42.

Le capot 52 définit de plus une ouverture centrale 56 s'ouvrant en regard de la partie de support 50 et permettant la fixation du pied latéral 28. Cette ouverture centrale 56 est par exemple fermée par une couverture amovible en plastique transparent.

Avantageusement, chaque pied latéral 28 comprend, pour chaque portion recouverte 46, un joint d'étanchéité 58 s'étendant entre le bord 54 du capot 52 et la portion recouverte 46 de la plinthe 40, 42.

Le joint d'étanchéité 58 permet d'éviter l'infiltration de liquides entre la plinthe 40, 42 et le bord 54, de manière à prévenir les attaques de corrosion sur le pied latéral 28.

Le véhicule 10 comprend de plus des éléments de parement 60 des premières parois 22 et des deuxièmes parois 24, qui s'étendent le long des parois 22, 24 pour en améliorer l'aspect visuel. Les éléments de parement 60 sont masqués sur la figure 2 et visibles sur la figure 3.

Avantageusement, un bord supérieur 62 de chaque plinthe 40, 42 est disposé entre l'élément de parement 60 et la paroi 22, 24, de sorte que la plinthe 40, 42 s'insère entre l'élément de parement 60 et la paroi 22, 24. Cet agencement permet d'éviter l'écoulement de liquides résultant de la condensation ou d'aspersions accidentelles derrière les plinthes 40, 42, afin de protéger les câbles 36 et de prévenir les courts-circuits ou la corrosion.

Le véhicule 10 selon l'invention permet donc d'employer des plinthes 40, 42 de longueurs L identiques pour des rangées 18, 20 de sièges 16 à pas P₁, P₂ distincts, en reprenant la différence de longueur sur une ou plusieurs portions recouvertes 46 par les pieds latéraux 28 des sièges 16. Ainsi, la conception des plinthes 40, 42 du véhicule est facilitée, et il est possible de faire varier simplement l'écartement entre les sièges 16 du véhicule 10 sans avoir à reconcevoir et produire de nouvelles plinthes 40, 42. De plus, le montage et la gestion des stocks de pièces sont simplifiés puisqu'il n'est pas nécessaire de prendre en compte plusieurs types de plinthes différentes.

Le véhicule 10 est également plus modulable, puisque le passage d'une rangée de sièges 16 d'une configuration de type première classe à une configuration de type deuxième classe, ou l'inverse, ne nécessite pas de remplacement des plinthes 40, 42. En outre, le fait que les câbles 36 soient intégralement portés par les plinthes 40, 42 évite de débrider et rebrider les câbles lors d'un tel changement de configuration, un simple déplacement de la plinthe 40, 42 étant suffisant.

## Revendications

1. Véhicule (10) comprenant :
- au moins une première rangée (18) de sièges (16) successivement alignés le long d'une première paroi (22) du véhicule (10), les sièges (16) de chaque première rangée (18) étant séparés les uns des autres par un premier pas (P₁) constant,
- au moins une deuxième rangée (20) de sièges (16) successivement alignés le long d'une deuxième paroi (24) du véhicule (10), les sièges (16) de chaque deuxième rangée (20) étant séparés les uns des autres par un deuxième pas (P₂) constant, le deuxième pas (P₂) étant strictement inférieur au premier pas (P₁),
chaque siège (16) de chaque première rangée (18) et de chaque deuxième rangée (20) comprenant un pied latéral (28) respectif,
- des câbles (36) s'étendant entre les pieds latéraux (28) des sièges (16) successifs de la première rangée (18) et de la deuxième rangée (20),
- des premières plinthes (40), chaque première plinthe (40) s'étendant entre les pieds latéraux (28) de deux des sièges (16) de chaque première rangée (18) et recouvrant et portant les câbles (36), et
- des deuxièmes plinthes (42), chaque deuxième plinthe (42) s'étendant entre les pieds latéraux (28) de deux des sièges (16) de chaque deuxième rangée (20) et recouvrant et portant les câbles (36), chaque première plinthe (40) et/ou chaque deuxième plinthe (42) comprenant, à au moins une extrémité (44), une portion recouverte (46) par un des pieds latéraux (28) des sièges (16) entre lesquels la première plinthe (40) et/ou la deuxième plinthe (42) est disposée,
**caractérisé en ce que** les premières plinthes (40) et les deuxièmes plinthes (42) présentent des longueurs (L) identiques, mesurées selon une direction d'étendue respectivement de la première rangée (18) et de la deuxième rangée (20).

2. Véhicule (10) selon la revendication 1, dans lequel les câbles (36), les premières plinthes (40) et les deuxièmes plinthes (42) s'étendent respectivement le long de la première paroi (22) et de la deuxième paroi (24), chaque portion recouverte (46) s'étendant de préférence entre la première paroi (22), respectivement la deuxième paroi (24), et le pied latéral (28).

3. Véhicule (10) selon l'une quelconque des revendication 1 à 2, dans lequel chaque première plinthe (40) et chaque deuxième plinthe (42) s'étend dans un plan sensiblement parallèle à des direction d'élongation principales des pieds latéraux (28).

4. Véhicule (10) selon l'une quelconque des revendications 1 à 3, dans lequel chaque pied latéral (28) comprend une partie de support (50) d'une assise (30) du siège (16) et un capot (52) recouvrant au moins partiellement la partie de support (50), chaque portion recouverte (56) des plinthes (40, 42) étant recouverte par le capot (52) d'un pied latéral (28) et s'étendant à l'écart de la partie de support (50) dudit pied latéral (28).

5. Véhicule (10) selon la revendication 4, dans lequel chaque pied latéral (28) comprend, pour chaque portion recouverte (46), un joint d'étanchéité (58) s'étendant entre le capot (52) et la portion recouverte (46).

6. Véhicule (10) selon l'une quelconque des revendications 1 à 5, dans lequel les pieds latéraux (28) des sièges (16) de la première rangée (18) et les pieds latéraux (28) des sièges (16) de la seconde rangée (20) sont identiques les uns aux autres.

7. Véhicule (10) selon l'une quelconque des revendications 1 à 6, dans lequel chaque portion recouverte (46) de chaque première plinthe (40) présente une longueur (R₁) strictement inférieure à 5% de la longueur (L) de la première plinthe (40) et chaque portion recouverte (46) de chaque deuxième plinthe (42) présente une longueur (R₂) strictement supérieure à 5% de la longueur (L) de la deuxième plinthe (42).

8. Véhicule (10) selon l'une quelconque des revendications 1 à 7, dans lequel chaque plinthe (40, 42) présente une longueur (L) comprise entre 500 mm et 800 mm, de préférence comprise entre 600 mm et 650 mm.

9. Véhicule (10) selon l'une quelconque des revendications 1 à 8, dans lequel chaque première plinthe (40) et chaque deuxième plinthe (42) présente un bord supérieur (62) s'étendant entre la première paroi (22), respectivement la seconde paroi (24) et un élément de parement (60) de la paroi (22, 24).

10. Véhicule (10) selon l'une quelconque des revendications 1 à 9, dans lequel les câbles (36) sont entièrement portés par les premières plinthes (40) et les deuxièmes plinthes (42).

## Patentansprüche

1. Fahrzeug (10), umfassend:
- mindestens eine erste Reihe (18) von Sitzen (16), die nacheinander entlang einer ersten Wand (22) des Fahrzeugs (10) ausgerichtet sind, wobei die Sitze (16) jeder ersten Reihe (18) durch einen konstanten ersten Abstand (P₁) voneinander getrennt sind,
- mindestens eine zweite Reihe (20) von Sitzen (16), die nacheinander entlang einer zweiten Wand (24) des Fahrzeugs (10) ausgerichtet sind, wobei die Sitze (16) jeder zweiten Reihe (20) durch einen konstanten zweiten Abstand (P₂) voneinander getrennt sind, wobei der zweite Abstand (P₂) strikt kleiner als der erste Abstand (P₁) ist,
wobei jeder Sitz (16) jeder ersten Reihe (18) und jeder zweiten Reihe (20) einen jeweiligen Seitenfuß (28) umfasst,
- Kabel (36), die sich zwischen den Seitenfüßen (28) der aufeinanderfolgenden Sitze (16) der ersten Reihe (18) und der zweiten Reihe (20) erstrecken,
- erste Sockelleisten (40), wobei sich jede erste Sockelleiste (40) zwischen den Seitenfüßen (28) von zwei der Sitze (16) jeder ersten Reihe (18) erstreckt und die Kabel (36) bedeckt und trägt, und
- zweite Sockelleisten (42), wobei sich jede zweite Sockelleiste (42) zwischen den Seitenfüßen (28) von zwei der Sitze (16) jeder zweiten Reihe (20) erstreckt und die Kabel (36) bedeckt und trägt, wobei jede erste Sockelleiste (40) und/oder jede zweite Sockelleiste (42) an mindestens einem Ende (44) einen Abschnitt umfasst, der von einem der Seitenfüße (28) der Sitze (16), zwischen denen die erste Sockelleiste (40) und/oder die zweite Sockelleiste (42) angeordnet ist, bedeckt (46) wird,
**dadurch gekennzeichnet, dass** die ersten Sockelleisten (40) und die zweiten Sockelleisten (42) identische Längen (L) aufweisen, gemessen gemäß einer Erstreckungsrichtung jeweils der ersten Reihe (18) und der zweiten Reihe (20).

2. Fahrzeug (10) nach Anspruch 1, wobei sich die Kabel (36), die ersten Sockelleisten (40) und die zweiten Sockelleisten (42) jeweils entlang der ersten Wand (22) und der zweiten Wand (24) erstrecken, wobei sich jeder bedeckte Abschnitt (46) vorzugsweise zwischen der ersten Wand (22) beziehungsweise der zweiten Wand (24) und dem Seitenfuß (28) erstreckt.

3. Fahrzeug (10) nach einem der Ansprüche 1 bis 2, wobei sich jede erste Sockelleiste (40) und jede zweite Sockelleiste (42) in einer Ebene erstreckt, die im Wesentlichen parallel zu den Hauptrichtungen der Ausdehnung der Seitenfüße (28) ist.

4. Fahrzeug (10) nach einem der Ansprüche 1 bis 3, wobei jeder Seitenfuß (28) einen Stützabschnitt (50) für eine Sitzfläche (30) des Sitzes (16) und eine Abdeckung (52) umfasst, die den Stützabschnitt (50) zumindest teilweise bedeckt, wobei jeder bedeckte Abschnitt (56) der Sockelleisten (40, 42) von der Abdeckung (52) eines Seitenfußes (28) bedeckt ist und sich von dem Stützabschnitt (50) des Seitenfußes (28) beabstandet erstreckt.

5. Fahrzeug (10) nach Anspruch 4, wobei jeder Seitenfuß (28) für jeden bedeckten Abschnitt (46) eine Dichtung (58) umfasst, die sich zwischen der Abdeckung (52) und dem bedeckten Abschnitt (46) erstreckt.

6. Fahrzeug (10) nach einem der Ansprüche 1 bis 5, wobei die Seitenfüße (28) der Sitze (16) der ersten Reihe (18) und die Seitenfüße (28) der Sitze (16) der zweiten Reihe (20) untereinander identisch sind.

7. Fahrzeug (10) nach einem der Ansprüche 1 bis 6, wobei jeder bedeckte Abschnitt (46) jeder ersten Sockelleiste (40) eine Länge (R₁) aufweist, die strikt kleiner als 5 % der Länge (L) der ersten Sockelleiste (40) ist, und jeder bedeckte Abschnitt (46) jeder zweiten Sockelleiste (42) eine Länge (R₂) aufweist, die strikt größer als 5 % der Länge (L) der zweiten Sockelleiste (42) ist.

8. Fahrzeug (10) nach einem der Ansprüche 1 bis 7, wobei jede Sockelleiste (40, 42) eine Länge (L) zwischen 500 mm und 800 mm, vorzugsweise zwischen 600 mm und 650 mm, aufweist.

9. Fahrzeug (10) nach einem der Ansprüche 1 bis 8, wobei jede erste Sockelleiste (40) und jede zweite Sockelleiste (42) eine Oberkante (62) aufweist, die sich zwischen der ersten Wand (22) beziehungsweis der zweiten Wand (24) und einem Verblendungselement (60) der Wand (22, 24) erstreckt.

10. Fahrzeug (10) nach einem der Ansprüche 1 bis 9, wobei die Kabel (36) vollständig von den ersten Sockelleisten (40) und den zweiten Sockelleisten (42) getragen werden.

## Claims

1. A vehicle (10) comprising:
- at least one first row (18) of seats (16) successively aligned along a first wall (22) of the vehicle (10), the seats (16) of each first row (18) being separated from each other by a first constant separation distance (P₁),
- at least one second row (20) of seats (16) successively aligned along a second wall (24) of the vehicle (10), the seats (16) of each second row (20) being separated from each other by a second constant separation distance (P₂), the second separation distance (P₂) being strictly less than the first separation distance (P₁),
each seat (16) of each first row (18) and each second row (20) having a respective lateral foot (28),
- cables (36) extending between the lateral feet (28) of the successive seats (16) of the first row (18) and of the second row (20),
- first baseboards (40), each first baseboard (40) extending between the lateral feet (28) of two of the seats (16) of each first row (18) and covering and supporting the cables (36), and
- second baseboards (42), each second baseboard (42) extending between the lateral feet (28) of two of the seats (16) of each second row (20) and covering and supporting the cables (36),
**characterized in that** the first baseboards (40) and the second baseboards (42) have identical lengths (L), measured along a direction of extent of the first row (18) and of the second row (20), respectively, each first baseboard (40) and/or each second baseboard (42) comprises, on at least one end (44), a portion covered (46) by one of the lateral feet (28) of the seats (16) between which the first baseboard (40) and/or the second baseboard (42) is arranged.

2. The vehicle (10) according to claim 1, wherein the cables (36), the first baseboards (40) and the second baseboards (42) extend along the first wall (22) and the second wall (24), respectively, each covered portion (46) preferentially extending between the first wall (22), the second wall (24), respectively, and the lateral foot (28).

3. The vehicle (10) according to any of claims 1 to 2, wherein each first baseboard (40) and each second baseboard (42) extends in a plane substantially parallel to main directions of elongation of the lateral feet (28).

4. The vehicle (10) according to any of claims 1 to 3, wherein each lateral foot (28) comprises a support part (50) of a seat pan (30) of the seat (16) and a cover (52) covering at least partially the support part (50), each covered portion (56) of the baseboards (40, 42) being covered by the cover (52) of a lateral foot (28) and extending away from the support part (50) of said lateral foot (28).

5. The vehicle (10) according to claim 4, wherein each lateral foot (28) comprises, for each covered portion (46), a seal (58) extending between the cover (52) and the covered portion (46).

6. The vehicle (10) according to any of claims 1 to 5, wherein the lateral feet (28) of the seats (16) of the first row (18) and the lateral feet (28) of the seats (16) of the second row (20) are identical to each other.

7. The vehicle (10) according to any of claims 1 to 6, wherein each covered portion (46) of each first baseboard (40) has a length (R₁) strictly shorter than 5% of the length (L) of the first baseboard (40) and each covered portion (46) of each second baseboard (42) has a length (R₂) strictly longer than 5% of the length (L) of the second baseboard (42).

8. The vehicle (10) according to any of claims 1 to 7, wherein each baseboard (40, 42) has a length (L) comprised between 500 mm and 800 mm, preferentially between 600 mm and 650 mm.

9. The vehicle (10) according to any of claims 1 to 8, wherein each first baseboard (40) and each second baseboard (42) has an upper edge (62) extending between the first wall (22), the second wall (24), respectively, and a facing member (60) of the wall (22, 24).

10. The vehicle (10) according to any of claims 1 to 9, wherein the cables (36) are fully supported by the first baseboards (40) and the second baseboards (42).
